# EUROPEAN PATENT SPECIFICATION

(11) **EP 0 565 291 B1**
(45) Date of publication and mention of the grant of the patent: **14.05.1997**
(21) Application number: 93302448.1
(22) Date of filing: 30.03.1993
(51) Int. Cl.: A23B 7/148, A23B 7/144, A23B 7/152, A23L 3/3427

(54) **Controlling atmospheres in containers**
Kontrolle der Atmosphäre in Containern
Contrôle d'atmosphère dans des containers

(30) Priority: 06.04.1992 GB 9207495
(43) Date of publication of application: 13.10.1993
(73) Proprietor: The BOC Group plc, Windlesham Surrey GU20 6HJ (GB)
(72) Inventor: Garrett, Michael Ernest, Woking, Surrey (GB)
(74) Representative: Gough, Peter

(56) References cited:
- EP-A- 0 270 764
- EP-A- 0 315 309
- EP-A- 0 467 668

## Description

The present invention relates to systems for controlling the atmosphere within containers and more particularly to systems for controlling the atmosphere in containers used for the storage and transportation of perishable produce such as fruit, vegetables and flowers.

It is known that during the storage and/or transportation of perishable produce its preservation can be enhanced by controlling the atmosphere surrounding the produce. For example, it has been found that an atmosphere in which nitrogen predominates is particularly useful for controlling the preservation of perishable products. Furthermore, in addition to controlling the amount of oxygen present in the atmosphere there has also be found a need to control the amount of other substances which may be present, for example, carbon dioxide and ethylene which might be formed by the produce whilst contained within the container.

In our co-pending European Patent Application EP-A-467668 there is described a system for controlling the atmosphere of a container for use in the storage and/or transportation of perishable goods. The system includes adsorption means in the form of a plurality of beds, each bed being designed preferentially to adsorb from the atmosphere one or more of water vapour, carbon dioxide, oxygen and ethylene. Some of the beds are designed to work on a temperature swing adsorption cycle and at least one bed is designed to operate on a pressure swing adsorption/desorption cycle.

Although the system described in our co-pending application achieves all of the requirements in terms of atmosphere control it remains complicated and somewhat bulky and in particular heat is required to assist in the regeneration of the adsorbent beds which are designed to operate on the temperature swing adsorption cycle.

It is an aim of the present invention to provide a simplified system which will achieve the same effect, that is, independent control of the gases likely to be found in the atmosphere of a container for perishable goods.

According to the present invention, a method for modifying the composition of a gas mixture comprising nitrogen, oxygen, carbon dioxide, water vapour and ethylene contained in a chamber using a series of four single adsorption vessels, characterised by the successive steps: pressurising a portion of said atmosphere; adsorbing water vapour from said pressurised atmosphere by passing it cocurrently through the first adsorption vessel in said series, containing an adsorbent which preferentially adsorbs water vapour from said atmosphere, thereby producing a pressurised water vapour-depleted atmosphere; adsorbing ethylene from said pressurised water vapour-depleted atmosphere by passing it cocurrently through the second adsorption vessel in said series, containing an adsorbent which preferentially adsorbs ethylene from said atmosphere, thereby producing a pressurised water vapour- and ethylene-depleted atmosphere; adsorbing carbon dioxide from said pressurised water vapour- and ethylene-depleted atmosphere by passing it cocurrently through the third adsorption vessel in said series, containing an adsorbent which preferentially adsorbs carbon dioxide from said atmosphere, thereby producing a pressurised water vapour-, ethylene- and carbon dioxide-depleted atmosphere; adsorbing nitrogen from said pressurised water vapour-, ethylene- and carbon dioxide-depleted atmosphere by passing it cocurrently through the fourth adsorption vessel in said series, containing an adsorbent which preferentially adsorbs nitrogen from said pressurised atmosphere; isolating and depressurising said second adsorption vessel, thereby desorbing ethylene from the adsorbent therein, and venting desorbed ethylene to the environment; countercurrently depressurising said fourth adsorption vessel, thereby desorbing nitrogen-rich gas from the adsorbent therein; purging said third adsorption vessel by countercurrently passing said nitrogen-rich gas therethrough; purging said second vessel by countercurrently passing nitrogen-rich gas from said third adsorption vessel therethrough; purging said first bed by countercurrently passing nitrogen-rich gas from said second adsorption vessel therethrough, thereby producing a moistened nitrogen-rich gas; and returning said moistened nitrogen-rich gas stream to said chamber.

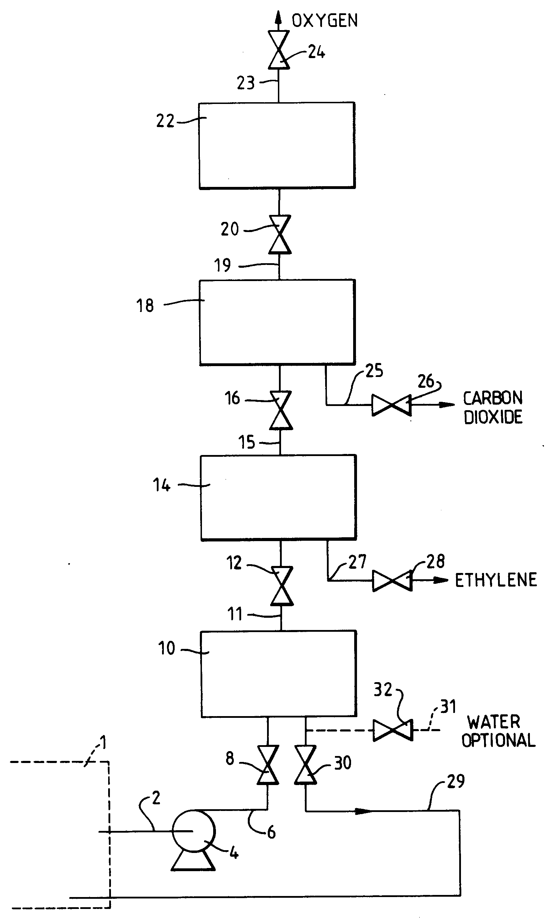

An embodiment of the invention will now be described, by way of example, reference being made to the Figure of the accompanying diagrammatic drawing which is a schematic flow diagram of a system for controlling the atmosphere within a container.

For the avoidance of doubt, the word "container" used throughout this specification is intended to embrace not only individual containers but also enclosed parts of warehouses, ship's holds and the like.

As shown in the Figure, a system for controlling the atmosphere in a container 1 for perishable goods such as fruit, vegetables and flowers comprises a line 2 communicating at one end with the interior of the container 1 and at its opposite end with the suction side of a compressor 4. A line 6 controlled by a valve 8 extends from the outlet of compressor 4 to the inlet of a first adsorbent bed 10 which forms part of a plurality of adsorbent beds 10, 14, 18, 22 arranged in series.

As shown, the adsorbent bed 10 is connected by line 11 controlled by valve 12 to the adsorbent bed 14. Adsorbent bed 14 is connected by line 15 controlled by valve 16 to the adsorbent bed 18. The adsorbent bed 18 is connected by line 19 controlled by valve 20 to the adsorbent bed 22. A line 23 controlled by valve 24 extends from the adsorbent bed 22 for use in venting the adsorbent bed 22 to ambient atmosphere as will be explained.

The adsorbent bed 10 contains a material, for example, alumina, adapted to remove water vapour from the container atmosphere feed gas stream. The adsorbent bed 14 contains a selective zeolitic ethylene adsorber, preferably a metal substituted NaY type zeolite. The ethylene adsorber adsorbs ethylene preferentially over nitrogen in particular. The adsorbent bed 18 contains a material effective for removing carbon dioxide and examples of such materials are zeolites such as zeolite 13X and mordenites, alumina, carbon molecular sieve and activated carbon. The adsorbent bed 22 contains a zeolite material which preferentially adsorbs nitrogen.

Extending from the adsorbent bed 18 is a line 25 controlled by a valve 26. Similarly, a line 27 controlled by a valve 28 extends from the adsorbent bed 14. A line 29 controlled by a valve 30 extends from the first adsorbent bed 10 back to the interior of container 1. Finally, a line 31 may be included which communicates with the interior of the adsorbent bed 10 and is controlled by a valve 32.

The perishable foodstuffs such as fruits and vegetables contained within container 1 tend to consume oxygen and emit carbon dioxide and ethylene during storage in amounts which if left uncontrolled would hasten spoilage. In accordance with the present invention the container 1 is provided with a gaseous atmosphere having a predominant amount of relatively inert gas such as nitrogen and to this effect a portion of the atmosphere within the container 1 is removed by the action of the compressor 4 via line 2. The compressed atmosphere then passes through line 6 and open valve 8 into adsorbent bed 10 and subsequently through line 11 and valve 12 to adsorbent bed 14; line 15 open valve 16 to adsorbent bed 18; and through line 18 open valve 20 to adsorbent bed 22. At this time the valves 24, 26 28 and 32 are closed such that all the adsorbent beds will be pressurised to such an effect that the water vapour in the compressed atmosphere is adsorbed in the adsorbent bed 10, the ethylene is entrapped on the sieve in the adsorbent bed 14, carbon dioxide is adsorbed in the adsorbent bed 18, and nitrogen is adsorbed in the adsorbent bed 22.

When the beds have reached a predetermined pressure the valve 24 is opened so that the interstitial oxygen gas in bed 22 can be discharged to ambient atmosphere. The communicating valves 12, 16, 20 are then closed and the adsorbent bed 14 is vented to ambient atmosphere by opening valve 28 such that ethylene passes from the adsorbent bed 14 through line 27 and valve 28 to ambient atmosphere. At the same time the adsorbent bed 18 can be vented by opening the valve 26 such that carbon dioxide passes from the bed 18 through line 25 and valve 26 to ambient atmosphere.

The valves 26, 28 are then closed and the communicating valves 12, 16, 20 are reopened together with the valve 30 such that pressurised controlled atmosphere gas then passes back to the container via the line 29.

It will be evident, that the system can be readily controlled to provide a desired atmosphere within the container 1. By selecting the amount of oxygen leaving the bed 22 via line 23 and valve 24 the oxygen concentration in the container 1 can be allowed to increase because of air ingress or decreased by venting the gas to ambient atmosphere.

Similarly, the carbon dioxide can be rejected in whole or in part according to the amount vented from the adsorbent bed 18 via line 25 and valve 26. The same is true of the adsorbent bed 14. However, in practice it is normal to vent fully the ethylene to keep the concentration of ethylene in the container 1 to an absolute minimum.

The adsorbent bed 10 need not have a vent to ambient atmosphere because in most situations it is important to maintain a high humidity. However, in some situations that may not be desirable and line 31 controlled by valve 32 can be provided to allow venting to ambient atmosphere.

The embodiment described above refers to a single series of adsorbent beds and this would lead to an intermittent use of the compressor 4. It is evident therefore that a plurality of series could be used to ensure that the load on the compressor 4 remains steady and in this situation the individual series would be phased such that the controlled atmosphere returned to the container 1 would remain steady.

One advantage of the above described embodiment is that the adsorbent beds are based on the pressure swing adsorption/desorption cycle which operates at a faster rate than the equivalent temperature swing adsorption cycle. This means that the quantity of adsorbent material required is very much reduced and consequently the system becomes very much smaller than heretofore.

## Claims

1. A method for modifying the composition of a gas mixture comprising nitrogen, oxygen, carbon dioxide, water vapour and ethylene contained in a chamber using a series of four single adsorption vessels, characterised by the successive steps :
(a) pressurising a portion of said atmosphere;
(b) adsorbing water vapour from said pressurised atmosphere by passing it cocurrently through the first adsorption vessel in said series, containing an adsorbent which preferentially adsorbs water vapour from said atmosphere, thereby producing a pressurised water vapour-depleted atmosphere;
(c) adsorbing ethylene from said pressurised water vapour-depleted atmosphere by passing it cocurrently through the second adsorption vessel in said series, containing an adsorbent which preferentially adsorbs ethylene from said atmosphere, thereby producing a pressurised water vapour- and ethylene-depleted atmosphere;
(d) adsorbing carbon dioxide from said pressurised water vapour- and ethylene-depleted atmosphere by passing it cocurrently through the third adsorption vessel in said series, containing an adsorbent which preferentially adsorbs carbon dioxide from said atmosphere, thereby producing a pressurised water vapour-, ethylene- and carbon dioxide-depleted atmosphere;
(e) adsorbing nitrogen from said pressurised water vapour-, ethylene- and carbon dioxide-depleted atmosphere by passing it cocurrently through the fourth adsorption vessel in said series, containing an adsorbent which preferentially adsorbs nitrogen from said pressurised atmosphere;
(f) isolating and depressurising said second adsorption vessel, thereby desorbing ethylene from the adsorbent therein, and venting desorbed ethylene to the environment;
(g) countercurrently depressurising said fourth adsorption vessel, thereby desorbing nitrogen-rich gas from the adsorbent therein;
(h) purging said third adsorption vessel by countercurrently passing said nitrogen-rich gas therethrough;
(i) purging said second vessel by countercurrently passing nitrogen-rich gas from said third adsorption vessel therethrough;
(j) purging said first bed by countercurrently passing nitrogen-rich gas from said second adsorption vessel therethrough, thereby producing a moistened nitrogen-rich gas; and
(k) returning said moistened nitrogen-rich gas stream to said chamber.

2. A method as claimed in Claim 1, characterised by isolating and desorbing carbon dioxide from the adsorbent in said third vessel and venting desorbed carbon dioxide to the environment prior to step (g).

3. A method as claimed in Claim 1 or Claim 2, characterised by isolating and desorbing water vapour from the adsorbent in said first bed and venting desorbed water vapour to the environment prior to step (j).

## Patentansprüche

1. Verfahren zum Modifizieren der Zusammensetzung eines Stickstoff, Sauerstoff, Kohlendioxid, Wasserdampf und Ethylen enthaltenden Gasgemischs in einer Kammer unter Verwendung einer Reihe von vier einzelnen Adsorptionsgefäßen, gekennzeichnet durch die aufeinanderfolgenden Schritte:
a) Druckbeaufschlagen eines Teils der genannten Atmosphäre,
b) Adsorbieren von Wasserdampf aus der druckbeaufschlagten Atmosphäre durch Hindurchleiten derselben im Gleichstrom durch das erste Adsorptionsgefäß in der genannten Reihe, das ein Adsorptionsmittel enthält, das bevorzugt Wasserdampf aus der Atmosphäre adsorbiert, wodurch eine unter Druck stehende, an Wasserdampf erschöpfte Atmosphäre erzeugt wird,
c) Adsorbieren von Ethylen aus der unter Druck stehenden, an Wasserdampf erschöpften Atmosphäre durch Hindurchleiten derselben im Gleichstrom durch das zweite Adsorptionsgefäß in der genannten Reihe, das ein Absorptionsmittel enthält, welches bevorzugt Ethylen aus der Atmosphäre absorbiert, wodurch eine unter Druck stehende, an Wasserdampf und Ethylen erschöpfte Atmosphäre erzeugt wird,
d) Adsorbieren von Kohlendioxid aus der unter Druck stehenden an Wasserdampf und Ethylen erschöpften Atmosphäre durch Hindurchleiten derselben im Gleichstrom durch das dritte Adsorptionsgefäß in der genannten Reihe, das ein Adsorptionsmittel enthält, das bevorzugt Kohlendioxid aus der Atmosphäre adsorbiert, wodurch eine unter Druck stehende, an Wasserdampf, Ethylen und Kohlendioxid erschöpfte Atmosphäre erzeugt wird,
e) Adsorbieren von Stickstoff aus der unter Druck stehenden, an Wasserdampf, Ethylen und Kohlendioxid erschöpften Atmosphäre durch Hindurchleiten derselben im Gleichstrom durch das vierte Adsorptiongefäß in der genannten Reihe, das ein Adsorptionsmittel enthält, das bevorzugt Stickstoff aus der unter Druck stehenden Atmosphäre adsorbiert,
f) Absperren und Druckentlasten des zweiten Adsorptionsgefäßes, wodurch Ethylen von dem darin enthaltenen Adsorptionsmittel desorbiert wird und Entlüften des desorbierten Ethylens in die Umgebung,
g) Druckentlasten des vierten Adsorptionsgefäßes im Gegenstrom, wodurch stickstoffreiches Gas aus dem darin enthaltenen Adsorptionsmittel desorbiert wird,
h) Spülen des dritten Adsorptionsgefäßes durch Hindurchleiten des stickstoffreichen Gases im Gegenstrom,
i) Spülen des zweiten Adsorptionsgefäßes durch Hindurchleiten von stickstoffreichem Gas aus dem dritten Adsorptionsgefäß im Gegenstrom,
j) Spülen des ersten Betts durch Hindurchleiten von stickstoffreichen Gas aus dem zweiten Adsorptionsgefäß im Gegenstrom, wodurch ein angefeuchtetes stickstoffreiches Gas erzeugt wird, und
k) Rückführen des befeuchteten stickstoffreichen Gasstroms in die Kammer.

2. Verfahren nach Anspruch 1, gekennzeichnet durch Isolieren und Desorbieren von Kohlendioxid aus dem Adsorptionsmittel in dem dritten Adsorptionsgefäß und Entlüften des desorbierten Kohlendioxids in die Umgebung vor dem Schritt g).

3. Verfahren nach Anspruch 1 oder 2, gekennzeichnet durch Isolieren und Desorbieren von Wasserdampf aus dem Adsorptionsmittel in dem ersten Bett und Entlüften von desorbierten Wasserdampf in die Umgebung vor dem Schritt j).

## Revendications

1. Procédé pour modifier la composition d'un mélange gazeux contenant de l'azote, de l'oxygène, du dioxyde de carbone, de la vapeur d'eau et de l'éthylène, mélange contenu dans une chambre, en utilisant une série de quatre récipients individuels d'adsorption, procédé caractérisé par les étapes successives consistant à:
(a) pressuriser une partie de ladite atmosphère;
(b) adsorber la vapeur d'eau de ladite atmosphère pressurisée, en faisant passer cette atmosphère en écoulement cocourant dans le premier récipient d'adsorption de ladite série, contenant un adsorbant qui adsorbe préférentiellement la vapeur d'eau de ladite atmosphère, en produisant ainsi une atmosphère pressurisée appauvrie en vapeur d'eau ou dépourvue de vapeur d'eau;
(c) adsorber l'éthylène de ladite atmosphère pressurisée appauvrie en vapeur d'eau, en faisant passer cette atmosphère, en un écoulement cocourant, dans le second récipient d'adsorption de ladite série, ce récipient contenant un adsorbant qui adsorbe préférentiellement l'éthylène de ladite atmosphère, en produisant ainsi une atmosphère pressurisée appauvrie en vapeur d'eau et en éthylène ou débarrassée de la vapeur d'eau et de l'éthylène;
(d) adsorber le dioxyde de carbone de ladite atmosphère pressurisée appauvrie en vapeur d'eau et en éthylène, en faisant passer cette atmosphère en écoulement cocourant dans le troisième récipient d'adsorption de ladite série, contenant un adsorbant qui adsorbe préférentiellement le dioxyde de carbone de ladite atmosphère, en produisant ainsi une atmosphère pressurisée, appauvrie en (ou dépourvue de) vapeur d'eau, d'éthylène et d'oxyde de carbone;
(e) adsorber l'azote de ladite atmosphère pressurisée, appauvrie en vapeur d'eau, en éthylène et en dioxyde de carbone, en faisant passer cette atmosphère en un écoulement cocourant dans le quatrième récipient d'adsorption de ladite série, contenant un adsorbant qui adsorbe préférentiellement l'azote de ladite atmosphère sous pression;
(f) isoler et dépressuriser ledit second récipient d'adsorption, en provoquant ainsi la désorption de l'éthylène de l'adsorbant contenu dans le récipient, et en renvoyant dans l'environnement, par un évent, l'éthylène désorbé;
(g) dépressuriser à contre-courant ledit quatrième récipient d'adsorption, en provoquant ainsi la désorption d'un gaz riche en azote enlevé de l'adsorbant contenu dans ce récipient;
(h) purger ledit troisième récipient d'adsorption en y faisant passer à contre-courant ledit gaz riche en azote;
(i) purger ledit second récipient en y faisant passer à contre-courant du gaz riche en azote provenant dudit troisième récipient d'adsorption;
(j) purger ledit premier lit en y faisant passer à contre-courant du gaz riche en azote provenant dudit second récipient d'adsorption, en produisant ainsi un gaz humidifié riche en azote; et
(k) recycler vers ladite chambre ledit gaz humidifié, riche en azote.

2. Procédé selon la revendication 1, caractérisé par l'isolement et la désorption du dioxyde de carbone de l'adsorbant se trouvant dans le lit du troisième récipient et l'envoi vers l'environnement, par un évent, avant de réaliser l'étape (g) du dioxyde de carbone désorbé.

3. Procédé selon la revendication 1 ou la revendication 2, caractérisé par l'isolement et la désorption de la vapeur d'eau de l'adsorbant présent dans ledit premier lit et l'envoi à l'environnement, avant d'effectuer l'étape (j), de la vapeur d'eau désorbée.
